# EUROPÄISCHE PATENTSCHRIFT

(11) **EP 2 487 062 B1**
(45) Veröffentlichungstag und Bekanntmachung des Hinweises auf die Patenterteilung: **20.06.2018**
(21) Anmeldenummer: 12154596.6
(22) Anmeldetag: 09.02.2012
(51) Int. Cl.: B60K 37/06

(54) **Frontplatte mit darin eingespritztem Lichtleiter**
Front plate with injected optical fibre
Plaque frontale dotée d'un conducteur lumineux injecté dedans

(30) Priorität: 11.02.2011 DE 102011011028
(43) Veröffentlichungstag der Anmeldung: 15.08.2012
(73) Patentinhaber: Ditter Plastic GmbH + Co. KG, 77716 Haslach i.K. (DE)
(72) Erfinder: Ditter, Rolf Peter, 77716 Haslach i.K. (DE)
(74) Vertreter: Weickmann & Weickmann PartmbB

(56) Entgegenhaltungen:
- EP-A1- 0 282 392
- EP-A1- 0 590 170
- DE-A1- 10 226 892
- US-A- 4 155 972

## Beschreibung

### I. Anwendungsgebiet

Die Erfindung betrifft Abdeckungen aus Kunststoff, wie sie als Teile von Armaturentafeln in Kraftfahrzeugen, in Bedienfeldern von Maschinensteuerungen und für vielfältige andere Zwecke in der Industrie in großer Anzahl benötigt werden. Eine Abdeckung kann dabei eine fest montierte Blende ebenso sein wie eine bewegliches Bedienelement, beispielsweise eine Druck-Taste, ein Dreh-Regler oder Dreh-Schalter oder jedes andere Element, welches dahinter liegende Bauteile abdecken soll.

### II. Technischer Hintergrund

Solche Abdeckungen müssen besonders in der Automobilindustrie zur Verwendung in Armaturentafeln qualitativ hochwertig, also nicht nur maßhaltig, sondern auch von der Oberflächenstruktur und den Bedruckungsrändern etc. sehr hochqualitativ hergestellt werden.

Derartige Abdeckungen bestehen in aller Regel nicht nur aus einer die eigentliche Abdeckfunktion bietenden Frontplatte, sondern auch aus einem sich von der Rückseite der Frontplatte aus in die Tiefenrichtung weg erstreckenden Grundkörper, so dass Frontplatte und Grundkörper gemeinsam eine dreidimensionale Abdeckung ergeben, die ausreichend eigenstabil ist, gut gehandhabt und montiert werden kann und in der darüber hinaus weitere Zusatzfunktionen untergebracht werden können.

Die Frontplatte besteht zu diesem Zweck meist aus durchsichtigem Material, und ist mit einer lichtundurchlässigen Schicht auf ihrer Vorderseite bedeckt, die nur dort durchbrochen ist, wo ein lichtdurchlässiger, insbesondere hinterleuchteter Bereich in der Abdeckung erzielt werden soll. Zu diesem Zweck wird die lichtundurchlässige Schicht zunächst flächig deckend auf der Frontplatte aufgebracht und in den gewünschten Bereichen anschließend z. B. mittels Laserbeschuss wieder entfernt.

Eine solche Zusatzfunktion ist beispielsweise die Ausbildung von in der Tiefenrichtung der Abdeckung, insbesondere des Grundkörpers der Abdeckung, verlaufende Durchgangsöffnungen, die auf der Frontseite von der Frontplatte verschlossen oder auch offen gelassen werden können.

Die frontseitig offenen Durchlässe dienen beispielsweise zum Einsetzen von Schaltern, Bedienknöpfen (die selbst wieder eine Abdeckung im Sinne dieser Erfindung sein können) oder Ähnlichem von der Frontseite der Abdeckung her, während die auf der Frontseite durch die Frontplatte verschlossenen Sacklochkanäle andere Funktionen haben, und häufig nicht nur der Stabilisierung des Grundkörpers dienen:
So sind beispielsweise Bereiche der Abdeckung, etwa einzelne Sacklöcher, von der Rückseite der Abdeckung her hinterleuchtet mit Hilfe von z. B. Leuchtdioden, die auf einer hinter der Abdeckung platzierten Platine in entsprechender Position angeordnet werden.

Gerade wenn der zu beleuchtende Bereich in der Frontplatte der Abdeckung relativ klein ist, und sich wegen der Erstreckung in die Tiefe der Abdeckung die beleuchtende Leuchtdiode relativ weit hinter der Frontplatte befindet, beispielsweise ein bis zwei Zentimeter oder mehr, ist die Beleuchtungswirkung auf der Frontplatte zu gering.

Zu diesem Zweck ist es bekannt, in dem Sackloch der Abdeckung einen meist stiftförmigen Lichtleiter aus Kunststoff anzuordnen, der die Distanz zwischen der beleuchtenden Leuchtdiode und der in diesem Bereich lichtdurchlässigen Frontplatte überbrückt, um eine größere Lichtmenge an der Frontplatte ankommen zu lassen. Die Lichtleiterstifte bestehen dabei aus einem meist glasklaren, lichtdurchlässigen Kunststoff, und der Lichtleitereffekt besteht hauptsächlich darin, dass an den in Verlaufsrichtung des Lichtleiterstiftes verlaufenden Seitenflächen des Lichtleiterstiftes eine Reflexion des dort auftreffenden Lichtes stattfindet und dieses zurück in den Lichtleiter geworfen wird.

In diesem Zusammenhang ist es bereits bekannt, dass die Lichtleiterfunktion der Lichtleiterstifte geringer ist, wenn die Lichtleiterstifte durch einfaches Füllen des Sacklochkanals mit durchsichtigem Kunststoff im Spritzverfahren hergestellt werden, also die Lichtleiterstifte auf ihren gesamten Seitenflächen mit den umgebenden Wandungen des Sackloches, also des Grundkörpers der Abdeckung, verschmolzen sind.

Eine Verschmelzung der stirnseitigen Frontfläche und/oder des vorderen Bereiches der Seitenflächen des Lichtleiterstiftes mit insbesondere der Rückseite der Frontplatte ist dagegen im Wesentlichen unschädlich, da dort ein Durchtritt der Lichtstrahlung gerade erwünscht ist.

Aus diesem Grunde ist es bekannt, die Abdeckung einerseits und die Lichtleiterstifte andererseits getrennt, insbesondere beide im Spritzgussverfahren aus Kunststoff, herzustellen und anschließend die Lichtleiterstifte von hinten in die hinten offenen Sacklöcher einzuschieben, wo sie in der Regel durch Kraftschluss oder entsprechende formschlüssige Gestaltung von Lichtleiterstift und Sackloch gegeneinander verrastet werden.

Dies bedeutet jedoch einen hohen logistischen sowie Montageaufwand, da Abdeckung und Lichtleiterstifte zunächst getrennt, wenn auch ggf. im gleichen Spritzgusswerkzeug, hergestellt werden müssen, anschließend die Lichtleiterstifte aus der Spritzform entnommen, zwischengelagert, zum Montageort verbracht, dort in richtiger Zuordnung zu den Sacklochkanälen gebracht und in die Sacklochkanäle eingesetzt werden müssen. Egal ob dies manuell oder automatisch geschieht ist der Aufwand sehr hoch, auch bei automatischer Montage ist vor allem der Investitionsaufwand für Entnahmevorrichtungen, Montagevorrichtungen, Transportvorrichtungen, Lagerungsmittel etc. vor allem für die bis zu 20 Lichtleiterstifte oder mehr pro Abdeckung sehr hoch.

Ein weiteres Problem in diesem Zusammenhang besteht darin, dass solche Abdeckungen hinsichtlich der Form der Vorderseite der Frontplatte häufig nicht eben sind, sondern eine Wölbung aufweisen, die nicht nur in einer, sondern in zwei Raumrichtungen gegeben sein kann, wie dies häufig bei Abdeckungen für die Armaturentafeln von Kraftfahrzeugen der Fall ist.

Da aus spritztechnischen Gründen diese Wölbung der Vorderseite der Frontplatte meist auch auf der Rückseite der Frontplatte vorhanden ist, um eine gleichmäßige Wandstärke der Frontplatte zu erreichen, und die Lichtleiterstifte möglichst exakt mit ihrer Stirnfläche an der Rückseite der Frontplatte anliegen sollen, bedeutet dies, dass in einer solchen Abdeckung einzusetzende Lichtleiterstifte, welches 10, 20 oder auch mehr sein können, nicht untereinander gleich sind, sondern hinsichtlich Länge, Wölbung der Stirnfläche, Positionierung der Rastelemente in ihrem Längsverlauf usw. jeweils geringfügig unterschiedlich sind.

Dies bedeutet, dass die Lichtleiterstifte bezüglich der einzelnen Sacklochkanäle nicht untereinander austauschbar sind und wegen der geringen Abmessungen der Lichtleiterstifte, also etwa einer Länge von ein bis zwei Zentimetern und einer Querschnittserstreckung von wenigen Millimetern, sind die vorhandenen Unterschiede zwischen den verschiedenen Lichtleitern so gering, dass sie mit bloßem Auge häufig nicht erkannt werden können. Dies führt bei der anschließenden Montage der Lichtleiterstifte in den entsprechenden Sachlochkanälen der Abdeckung häufig zu Verwechslungen, wenn die Lichtleiterstifte nicht von Anfang an nach ihrer Art getrennt werden und selbst dann kommt es noch zu Verwechslungen.

Wenn jedoch in einen Sacklochkanal bei der Montage ein falscher Lichtleiterstift eingepresst wird, wird dies zusätzlich bei der Montage häufig nicht bemerkt, da eben die körperlichen Unterschiede zwischen den verschiedenen Lichtleitern sehr gering sind.

Dieser Fehler stellt sich meist erst später heraus, entweder weil eine anschließende Montage der mit Lichtleitern bestückten Abdeckung in einem umgebenden Bauteil nicht möglich ist oder dort zu einer Beschädigung entweder an der Abdeckung oder an dem falsch eingesetzten Lichtleiter oder an dem die Abdeckung umgebenden, aufnehmenden Bauteil führen.

Für den Zulieferanten der Abdeckung zu einer größeren Baugruppe ergibt dies jedoch große Schwierigkeiten, wenn er Ausschuss aufgrund falsch eingesetzter Lichtleiterstifte nicht erkennt und ein solches fehlerhaftes Bauteil an seinen Abnehmer liefert.

Ferner zeigt die EP 0 590 170 A1 ein Verfahren gemäß dem Oberbegriff des Anspruchs 1 sowie eine Abdeckung gemäß dem Oberbegriff des Anspruchs 12.

Des Weiteren zeigt die EP 0 282 392 A1 ein Spritzgusswerkzeug gemäß dem Oberbegriff des Anspruchs 9.

### III. Darstellung der Erfindung

### a) Technische Aufgabe

Es ist daher die Aufgabe gemäß der Erfindung, ein Verfahren zum Herstellen von Abdeckungen mit zusammen mit der Frontplatte gespritzten Lichtleiterstiften zur Verfügung zu stellen, welche trotz guter Lichtleitung mit nur geringen Lichtverlusten den Herstellungsaufwand verringert. Es soll ferner ein hierfür geeignetes Werkzeug und eine entsprechende Abdeckung zur Verfügung gestellt werden.

### b) Lösung der Aufgabe

Diese Aufgabe wird durch die Merkmale 1, 9 und 12 gelöst. Vorteilhafte Ausführungsformen ergeben sich aus den Unteransprüchen.

Bei der vorliegenden Lösung wird die Frontplatte mit dem lichtdurchlässigen Lichtleiterstift in einem oder zwei hintereinander durchgeführten Spritzschritten direkt aneinander gespritzt. Dabei besteht vorzugsweise die Frontplatte aus lichtundurchlässigem Kunststoff, und der lichtdurchlässige Lichtleiterstift durchdringt die Dicke der Frontplatte bis zu deren Vorderseite, und ist somit in seinem vorderen Bereich an den Umfangsflächen mit der Frontplatte verspritzt.

Daraus ergibt sich der erste Vorteil, dass - anders als beim Ansetzen des Lichtleiterstiftes an der Rückseite der Frontplatte - die Frontplatte eben von vornherein vorzugsweise aus lichtundurchlässigem Material gespritzt werden kann, und daher nicht unbedingt zusätzlich auf der Vorderseite eine lichtundurchlässige Beschichtung nachträglich auf die ansonsten lichtdurchlässige Frontplatte aufgebracht werden muss. Die Lichtleitung des Lichtleiterstiftes ist dennoch sehr gut, da der Lichtleiterstift nur in seinem geringen vorderen Bereich an den Seitenflächen mit der Frontplatte verklebt ist, ansonsten die Seitenflächen jedoch nicht mir umgebenen Bauteilen verklebt sind.

Nach Herstellen dieser Frontbaugruppe, bestehend aus Frontplatte und wenigstens einem Lichtleiterstift, wird der abseits davon im gleichen Werkzeug gespritzte Grundkörper, der für die Aufnahme des wenigstens einen Lichtleiterstiftes wenigstens einen von seiner Vorderseite zu seiner Rückseite offenen Kanal besitzt, direkt im Werkzeug von hinten über den Lichtleiterstift geschoben und soweit an die Rückseite der Frontplatte angenähert, dass der Grundkörper mit der Frontbaugruppe entweder durch formschlüssiges Verrasten oder durch kraftschlüssiges Verpressen oder auch auf andere Art und Weise fest verbunden wird, womit die Abdeckung fertig hergestellt ist.

Erreicht wird dies, indem nach Öffnen des Werkzeuges entweder der Grundkörper oder die Frontbaugruppe axial mittels eines beweglichen Werkzeugteiles aus dem Rest der Werkzeuges herausgefahren und in Querrichtung so bewegt wird, dass sich dieses Bauteil in fluchtender Position zu dem anderen Bauteil, mit dem es verbaut werden soll, befindet.

Durch das anschließende Schließen des Werkzeuges selbst oder Ausfahren eines Werkzeugschiebers werden die beiden Bauteile dann axial ineinander geschoben.

Der Vorteil dieser Vorgehensweise besteht darin, dass bei der Montage der Abdeckung, also dem Ineinanderschieben, lediglich zwei Teile gehandhabt werden müssen, nämlich die Frontbaugruppe einerseits und die Grundkörper andererseits.

Bei einer Abdeckung, die weit mehr als einen Lichtleiterstift aufweist, was sehr häufig der Fall ist, müssten bei einer anderen Vorgehensweise, bei der Grundkörper und Frontplatte miteinander eine Baugruppe bilden, in die anschließend die Lichtleiterstifte einmontiert werden, eine sehr große Anzahl von Lichtleiterstiften gehandhabt werden, die alle sehr passgenau in die nur geringfügig größeren Kanäle des Grundkörpers eingeschoben werden müssen, was wesentlich schwieriger automatisch im Werkzeug durchzuführen ist.

Für die beschriebene Vorgehensweise ist vorzugsweise eine Werkzeughälfte, insbesondere das Auswerferwerkzeug, drehbar um die Axialrichtung ausgebildet.

Grundkörper, Frontplatte und Lichtleiterstifte werden dabei in verschiedenen Sektionen des gleichen Werkzeuges gespritzt.

Eine Möglichkeit besteht darin, dass nach dem Spritzen die Frontbaugruppe in der einen Werkzeughälfte und der Grundkörper in der anderen Werkzeughälfte verbleibt, wenn das Werkzeug geöffnet wird, und anschließend eines der beiden Bauteile mittels eines axial ausfahrbaren und in Querrichtung bewegbaren Werkzeugteiles in fluchtende Position zu dem anderen Bauteil gebracht wird, so dass durch das anschließende Schließen des Werkzeuges die beiden Bauteile axial aufeinander geschoben werden.

Die andere Möglichkeit besteht darin, dass nach dem Spritzen Frontbaugruppe einerseits und Grundkörper andererseits in der gleichen Werkzeughälfte verbleiben, wenn das Werkzeug geöffnet wird. Auch hier muss anschließend eines der Bauteile mittels eines beweglichen Werkzeugteiles zunächst axial aus der Frontfläche ausgefahren und anschließend in Querrichtung so bewegt werden, dass es mit dem anderen zu montierenden Bauteil fluchtet.

Durch das anschließende entweder axiale Einfahren des beweglichen Werkzeugteiles und/oder Schließen des Werkzeuges werden dann ebenfalls die beiden miteinander zu montierenden Bauteile axial ineinander geschoben.

Unterschiedlich bei den beiden Lösungen ist jedoch die Orientierung des Grundkörpers: Während im ersten Fall der Grundkörper mit seiner vorderen Stirnfläche zur Kontaktfläche zwischen den beiden Werkzeughälften weist, hängt im zweiten Fall dies davon ab, welches der beiden Bauteile mittels des beweglichen Werkzeugteiles zunächst axial ausgefahren und in fluchtende Position zu dem anderen Bauteil gebracht wird.

Anstelle einer Querbewegung mittels eines beweglichen Werkzeugteiles, also Drehbewegung um eine axial ausgerichtete Achse oder Querverschiebung, kann auch eine Wendeplatte benutzt werden, wie sie typischerweise zwischen den beiden Werkzeughälften angeordnet ist und um eine Achse quer zur Axialrichtung um 180° verschwenkbar ist, in der vor der Montage eines der beiden miteinander zu montierenden Bauteile verbleibt.

Der typische Fall eines in Querrichtung beweglichen Werkzeugteiles ist eine Indexplatte, welche um eine axiale Achse, insbesondere seine Mittelachse, drehbar, insbesondere um 180° drehbar ist. Dann ist die eine der beiden Bauteilpositionen der Indexplatte die Montageposition.

Um die gewünschte Axialbewegung beim Aufeinanderschieben der beiden Bauteile zu erzielen, können entweder die beiden Werkzeughälften insgesamt gegeneinander gefahren werden, vorzugsweise bis zu deren Kontakt, oder ein separates Werkzeugteil in Form eines Werkzeugschiebers wird mechanisch, hydraulisch oder pneumatisch axial bezüglich der ihn tragenden Werkzeughälfte verschoben, und schiebt dadurch eines der beiden Bauteile in Richtung und auf das andere Bauteil.

Für diese Vorgehensweise benötigt man somit ein Spritzgusswerkzeug mit zwei Werkzeughälften, insbesondere Auswerferwerkzeug und Düsenwerkzeug, welches folgende Besonderheiten besitzt:
Zum einen müssen beide Werkzeughälften mindestens zwei Sektionen aufweisen, wobei sich in jeder Sektion mindestens eine Spritzkavität befindet. Des Weiteren muss eine Werkzeughälfte, insbesondere das Auswerferwerkzeug, gesteuert drehbar um die Axialrichtung, insbesondere seine Mittelachse, von einer zur nächsten Sektion sein. Wenn es nur zwei Sektionen gibt, muss sie also hin und her schwenkbar oder drehbar in 180°-Schritten sein.

Ferner muss in einer Werkzeughälfte, vorzugsweise der nicht-drehbaren Werkzeughälfte, z. B. dem Düsenwerkzeug, ein Werkzeugteil vorhanden sein, welches axial aus der Kontaktfläche dieses Werkzeuges heraus verfahrbar ist und im ausgefahrenen Zustand für die Querbewegung eines der Bauteile sorgt
- entweder um die axiale Richtung, z. B. die Mittelachse dieses Werkzeugteiles, verschwenkbar sein,
- oder quer in Querrichtung verlagerbar sein,
- oder um eine Querachse zur axialen Richtung verschwenkbar sein, insbesondere um 180°.

Mit Hilfe dieses beweglichen Werkzeugteiles werden die beiden gespritzten Bauteile vor ihrer wechselseitigen Montage in fluchtende Position zueinander gebracht.

Dieses bewegliche Werkzeugteil kann auch nur in einer der Sektionen vorhanden sein, und ist beispielsweise eine um seine axiale Mittelachse drehbare Indexplatte.

Zusätzlich kann - für das Ineinanderschieben der beiden gespitzten Bauteile - in einer Werkzeughälfte, insbesondere der nicht-drehbaren Werkzeughälfte, wenigstens in einer Sektion ein Werkzeugschieber vorhanden sein, der in Axialrichtung verschiebbar ist und fluchtend zu der Montageposition, beispielsweise in dem beweglichen Werkzeugteil, positioniert ist.

Für weitere Bearbeitungsschritte kann zusätzlich in wenigstens einer der Werkzeughälften auch eine materialabtragende Werkzeugeinheit, beispielsweise eine Fräseinheit, Bohreinheit, Dreheinheit oder Lasereinheit, angeordnet sein oder auch weitere Bearbeitungseinheiten, beispielsweise eine Klebeeinheit.

Mit dieser Vorgehensweise und/oder mit dem beschriebenen Werkzeug lässt sich somit eine Abdeckung aus gespritztem Kunststoff herstellen, bei der
- der wenigstens eine lichtdurchlässige Lichtleiterstift die Frontplatte durchdringt und bis zu deren Vorderseite reicht und im vorderen Endbereich seitlich umlaufend mit der Frontplatte verschmolzen ist,
- der Lichtleiterstift im übrigen Verlauf mit den Wänden des Kanals des umgebenden Grundkörpers weder verschmolzen noch verklebt ist und der Grundkörper mit der Frontbaugruppe, insbesondere der Frontplatte, fest verbunden, insbesondere verrastet ist.

Damit wird eine sehr gute Lichtleitung vom hinteren Ende des Lichtleiterstiftes bis in die Vorderseite der Frontplatte erreicht.

Zusätzlich kann der Grundkörper aus lichtundurchlässigem Material, insbesondere schwarzem oder weißem Material, bestehen, und auch die Frontplatte kann von Vornherein aus undurchsichtigem Material gespritzt werden und muss somit nicht zwingend anschließend mit einer lichtundurchlässigen Beschichtung auf der Frontseite versehen werden.

Wenn sich die Lichtleiterstifte und/oder die Kanäle im Grundkörper vom vorderen zum hinteren Ende verjüngen, insbesondere konisch verjüngen, kann das Verbinden der beiden Bauteile mittels Kraftschluss und ohne Verrasten erfolgen.

### c) Ausführungsbeispiele

Ausführungsformen gemäß der Erfindung sind im Folgenden beispielhaft näher beschrieben. Es zeigen:
- Fig. 1a:: eine fertig montierte Frontblende,
- Fig. 1b:: eine erfindungsgemäße Abdeckung im Längsschnitt,
- Fig. 2a,b:: die Frontbaugruppe in verschiedenen perspektivischen Ansichten,
- Fig. 2c, d.: die Abdeckung auf das Auswerferwerkzeug des Spritzwerkzeuges von der Kontaktfläche her,
- Fig. 3a:: eine Aufsicht auf das Auswerferwerkzeug von der Kontaktfläche her, und
- Fig. 3b:: eine Aufsicht auf das Düsenseite des Spritzwerkzeuges von der Kontaktfläche her.

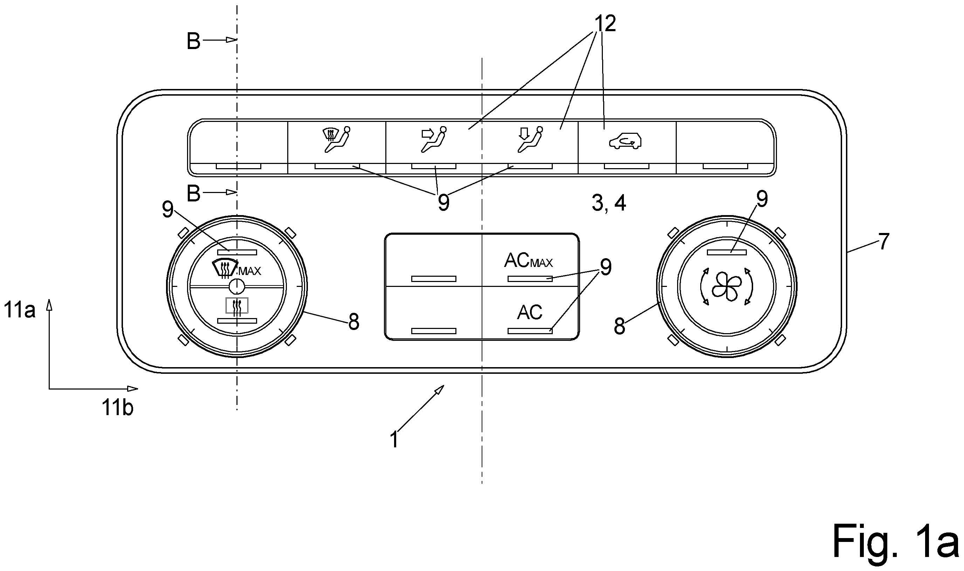

In Figur 1a ist ein typischer Anwendungsfall der erfindungsgemäßen Abdeckung dargestellt, nämlich eine Bedienblende 1' in der Armaturentafel 7 eines Kraftfahrzeuges.

Wie die Frontansicht auf die Bedienblende 1' in Figur 1a zeigt, besteht diese im Wesentlichen aus einer Vielzahl von Drucktasten 12, sei es in Rechteckform oder in halbrunder Form innerhalb der drei runden Bedieneinheiten, denen jeweils einzelne hinterleuchtbare Funktionsanzeigen 9 zugeordnet sind. Zum Teil befinden sich die Funktionsanzeigen 9 unter den Drucktasten 12, wie bei den rechteckigen Drucktasten, zum Teil auch innerhalb der Drucktasten 12 selbst, wie in den halbrunden Drucktasten.

Aus dieser Darstellung wird klar, dass die einzelnen Funktionsanzeigen 9 jeweils einzeln von hinten hinterleuchtbar sein müssen, und bei Beleuchtung einer der Funktionsanzeigen 9 eine daneben befindliche Funktionsanzeige kein Licht erhalten darf. Dies kann nur durch zur Seite hin abgeschottete Funktionsanzeigen 9 erreicht werden.

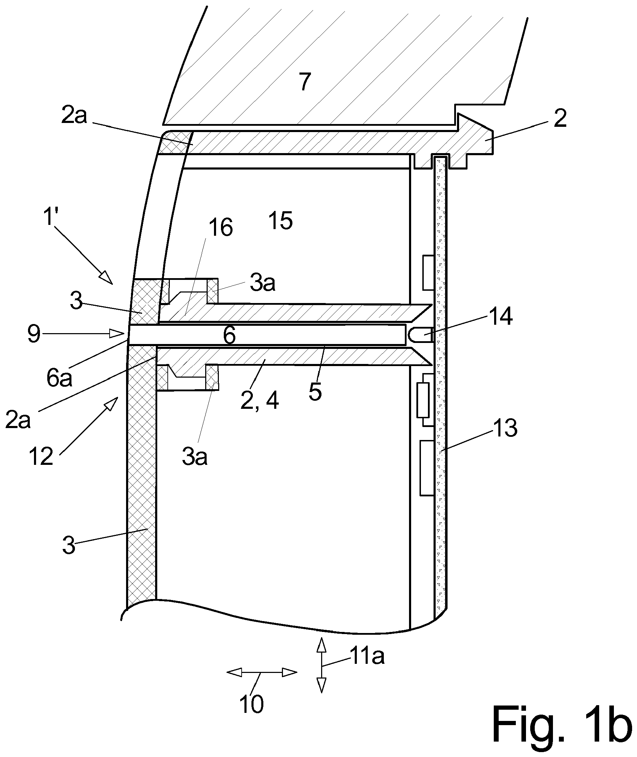

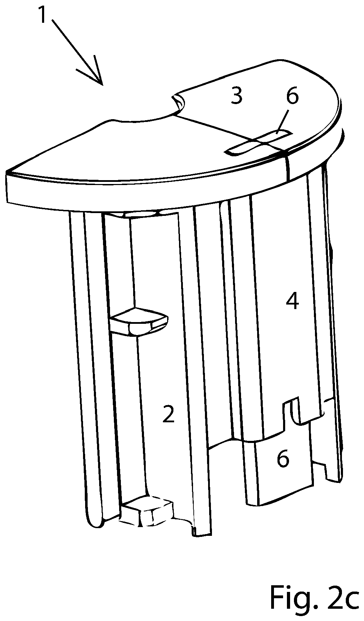

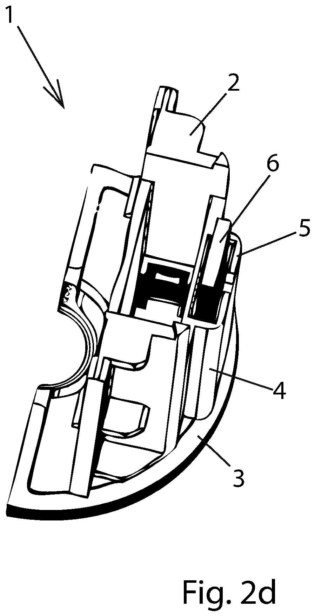

Die erfindungsgemäße Abdeckung kann die Bedienblende 1' sein, oder auch eine der Drucktasten 12. Im Folgenden ist als ein Beispiel einer erfindungsgemäßen Abdeckung 1 eine der halbrunden Drucktasten 12, nämlich in Figur 1a, die linke Drucktaste 12 entsprechend der Linie B-B im Längsschnitt, in Figur 1b und in den Figuren 2c, d in perspektivischen Ansichten dargestellt, jedoch gelten die dort beschriebenen Prinzipien auch für jede andere Abdeckung, sei es eine rechteckige Drucktaste 12 oder die nach Montage nicht bewegliche Bedienblende 1':

Die Abdeckung besteht aus der sogenannten Frontbaugruppe, die einerseits die in diesem Fall etwa halbkreisförmige Frontplatte 3 umfasst, sowie den durchsichtigen, von der Frontplatte 3 nach hinten abragenden Lichtleiterstift 6 aus lichtdurchlässigem Kunststoff, der jedoch bereits an der Vorderseite der Frontplatte 3 beginnt und diese durchdringt und im Dickenbereich der Frontplatte 3 mit dieser verspritzt ist.

Die Frontplatte 3 kann ferner abseits des Lichtleiters 6 nach hinten ragende Fortsätze 3a aufweisen, die in der Regel einstückig und einteilig zusammen mit der Frontplatte 3 hergestellt sind und wie diese aus einem undurchsichtigen Material bestehen.

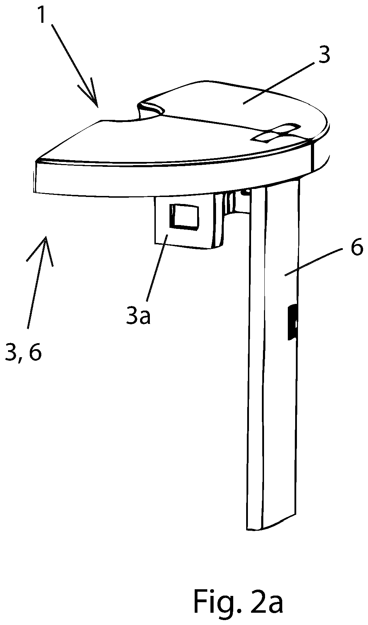

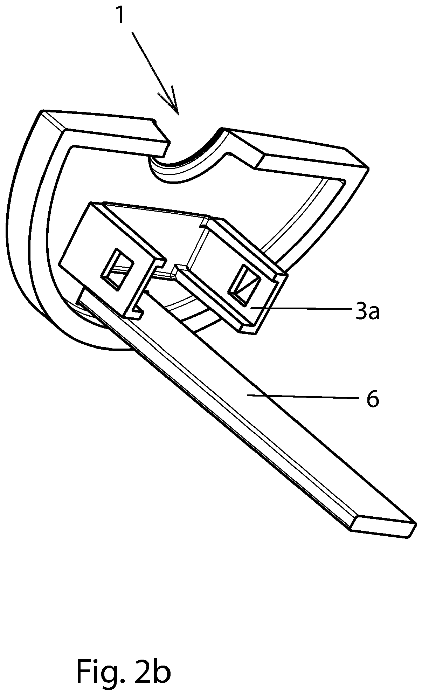

Diese Frontbaugruppe 3 + 6 ist in Figur 2a und 2b dargestellt.

Über diese Frontbaugruppe 3 + 6 wird von der Rückseite her, also auf das freie Ende des Lichtleiterstiftes 6, ein Grundkörper 2 aufgeschoben, der unter anderem eine Hülse 4 umfasst, die ein hohles Inneres aufweist, in welches der Lichtleiterstift 6 hineinpasst und diese vom Umfang her vollständig umschließt.

Wie die Figuren 2c und 2d zeigen, wird dieser Grundkörper 2 wird mit seiner Hülse 4 mit der Durchgangsöffnung über den Lichtleiterstift 6 geschoben, bis die vordere Stirnfläche des Grundkörpers 2 an der Rückseite der Frontplatte 3 kontaktiert und dort fixiert wird, beispielsweise verrastet, indem entsprechende Rastnasen in die Rastöffnungen der Fortsätze 3a der Frontplatte 3 verrasten.

Figur 1b zeigt die fertig montierte Abdeckung 1 im Längsschnitt, also mit Schlitzverlauf in Tiefenrichtung von der Frontplatte 3 aus nach hinten:
Dabei ist von dem Grundkörper 2 nur die Hülse 4 dargestellt, die mit ihren Rastnasen 16 in den Rastöffnungen der Fortsätze 3a der Frontplatte 3 verrastet, sobald der Grundkörper 2 bis zur Kontaktierung der Rückseite der Frontplatte 3 vorwärtsgeschoben ist.

Da der vorne und hinten offene Kanal 5 in der Hülse 4 des Grundkörpers 2 einen etwas größeren Querschnitt besitzt als der Lichtleiter 6, hält dieser umfänglich einen Abstand zu dem Grundkörper 2 ein.

Das Licht, welches von einer Leuchtdiode 14, die sich auf einer Platine 13 hinter dem hinteren Ende des Lichtleiterstiftes 6 befindet, in den Lichtleiter eingebracht worden ist, wird mittels Totalreflektion an den Seitenflächen des Lichtleiterstiftes 6 sehr gut zum vorderen Ende weitergeleitet und es gehen nur geringe Lichtanteile in den umgebenden Grundkörper 2 über.

An den verspritzten, also verschmolzenen Kontaktstellen des Lichtleiterstiftes 6 im vorderen Bereich zu der umgebenden Frontplatte 3, wird zwar etwas Licht von der Frontplatte 3 absorbiert, aber wegen der geringen Fläche sind dies nur unwesentliche Anteile.

Deshalb wird der weitaus größte Anteil des eingebrachten Lichts auf der vorderen Stirnfläche 6 und damit der Funktionsanzeige 9 sichtbar sein.

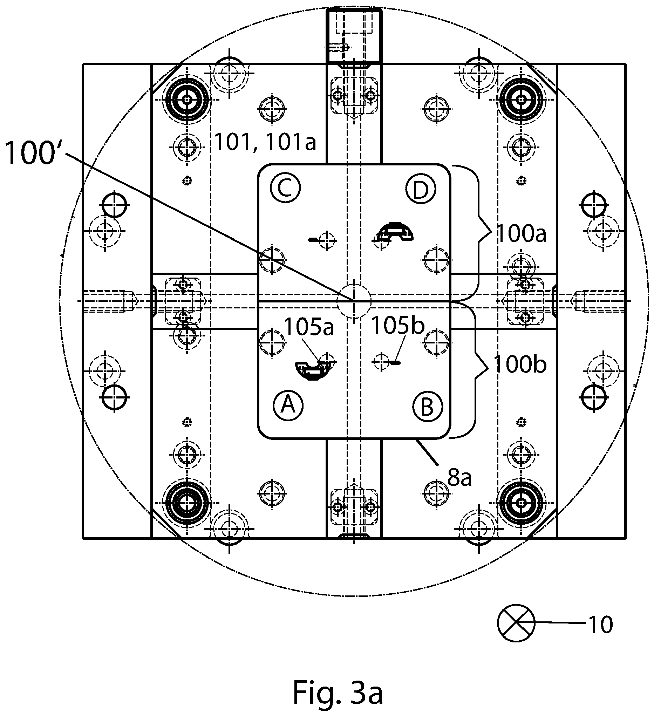

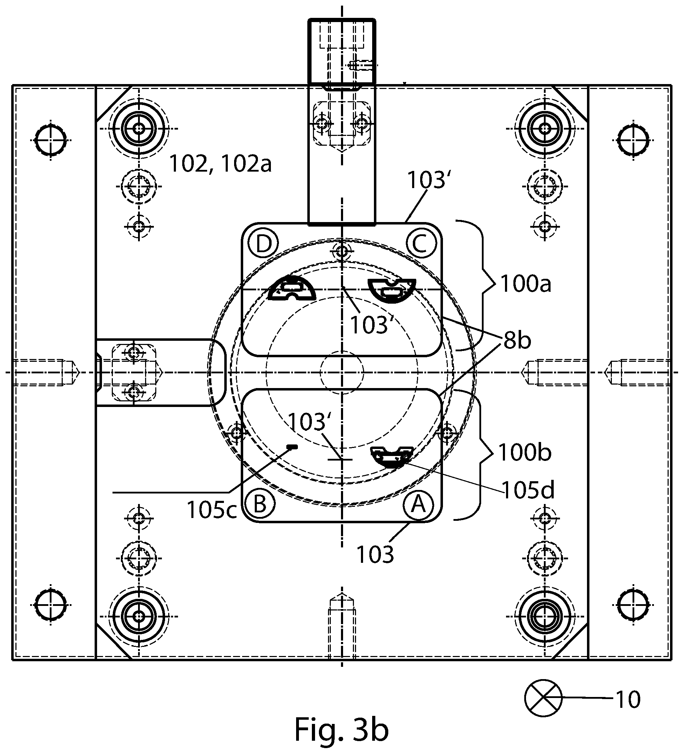

Anhand der Figuren 3a und 3b wird der Ablauf der Herstellung der Abdeckung 1 beschrieben, der neben dem Spritzen der Bauteile auch die gegenseitige Montage umfasst, die ebenfalls automatisch und im Werkzeug erfolgen soll.

Die Figuren 3a und 3b zeigen jeweils die Kontaktseite der jeweiligen Werkzeughälfte, die während des Spritzvorganges gegeneinander gepresst sind und dadurch im Inneren allseits umschlossene Kavitäten zum Einspritzen des Kunststoffes bilden.

Dabei ist die eine Werkzeughälfte, in der Regel das Düsenwerkzeug 102, ortsfest in der Maschine positioniert. Über diese Werkzeughälfte erfolgt das Einspritzen des flüssigen Kunststoffes, d.h. von der Rückseite oder den Seiten dieser Werkzeughälfte aus verlaufen Einspritzkanäle zu den Kavitäten im Spritzwerkzeug.

Die andere Werkzeughälfte wird Auswerferwerkzeug genannt, da die Kavitäten bezüglich der Kontaktfläche zwischen den beiden Werkzeughälften in der Regel so positioniert sind, dass nach Öffnen des Werkzeuges die fertig gespritzten Bauteile in dem Auswerferwerkzeug verbleiben, welches beweglich in der Maschine angeordnet ist und in axialer Richtung, der Tiefenrichtung 10, auf Abstand zum Düsenwerkzeug 102 gebracht werden kann. Anschließend werden im Auswerferwerkzeug 101 untergebrachte axial bewegliche Stößel, die sich hinter den Kavitäten und damit den gespritzten Werkstücken befinden, vorwärtsgefahren und dadurch das gespritzte Werkstück aus der Kontaktfläche des Auswerferwerkzeuges heraus ausgestoßen.

Die Kavitäten für das Spritzen der Werkstücke sind innerhalb des Formbereiches 8a, b angeordnet. Die außerhalb davon liegenden, sichtbaren Elemente sind Führungen und andere Funktionselemente zum Schließen des Spritzwerkzeuges 100.

Im vorliegenden Fall ist das Auswerferwerkzeug 101 um seine Mittelachse 100' in 180°-Schritten hin und her schwenkbar oder drehbar, und besitzt beidseits seiner Quermitte die gleichen Kavitäten 105a, b in gleicher Anordnung und somit zwei Sektionen 100a, b.

In dem Auswerferwerkzeug 101 gibt es somit insgesamt vier Kavitäten, auch als Stationen A bis D bezeichnet.

Im ersten Spritzschritt wird z. B. in der unteren Sektion 100b in der Station A und der dortigen Kavität 105a der Grundkörper 2 gespritzt und gleichzeitig daneben in der Station B in der Kavität 105b der Lichtleiterstift.

Die Kavität 105a ist dabei in axialer Richtung 100' so positioniert, dass nach dem Öffnen des Werkzeuges der Grundkörper 2 in dem Auswerferwerkzeug 101 verbleibt, während der Lichtleiterstift 6 in dem Düsenwerkzeug 102 verbleibt.

Nach diesem ersten Spritzschritt und natürlich im geöffneten Zustand des Werkzeuges wird das Auswerferwerkzeug 101 um seine Mittelachse 100' um 180° gedreht und anschließend das Werkzeug 100 wieder geschlossen, also das Auswerferwerkzeug 101 bis auf Kontakt an das Düsenwerkzeug 102 herangefahren.

Von den im ersten Spritzschritt in den Stationen A und B gespritzten Bauteilen befindet sich nun der Lichtleiterstift 6 in der Station C, und dort wird im zweiten Spritzschritt um den Lichtleiterstift 6 herum die Frontplatte 3 gespritzt.

Der Grundkörper 2 befindet sich dagegen nunmehr in der Station D und in diesem zweiten Schritt wird an diesem Grundkörper keine weitere Bearbeitung mehr vorgenommen.

Gleichzeitig kann natürlich in diesem zweiten Spritzschritt in den Stationen A und B gleichzeitig wieder ein Grundkörper 2 und ein Lichtleiterstift 6 gespritzt werden.

Anschließend wird das Werkzeug 100 wieder geöffnet, also das Auswerferwerkzeug 101 auf Abstand zum Düsenwerkzeug 102 gefahren, wobei in der oberen Hälfte die nunmehr fertig gestellte Frontbaugruppe 3 + 6 in der Station C des Düsenwerkzeuges 102 verbleibt und mit dem freien hinteren Ende des Lichtleiterstiftes 6 in Richtung Auswerferwerkzeug 101 gerichtet ist.

An der Station D im Auswerferwerkzeug 101 verbleibt nach wie vor der Grundkörper 2 und ist mit seiner vorderen Stirnfläche in Richtung Düsenwerkzeug 102 gerichtet.

Im Düsenwerkzeug 102, welches ebenfalls eine oberhalb und eine unterhalb der Mittellinie liegende Sektion 100a, b aufweist, sind die in den beiden Sektionen vorhandenen Kavitäten, z. B. 105c, 105d, jeweils in einer eigenen Indexplatte 103 angeordnet, die in axialer Richtung aus dem Düsenwerkzeug 102 über dessen Kontaktfläche 102a hinaus axial vorschiebbar und um die in axialer Richtung 100' verlaufende Mittelachse 103' um 180° schwenkbar oder drehbar ist.

Mit Hilfe der momentan in der oberen Sektion 100a befindlichen Indexplatte 103 wird auf diese Art und Weise die zunächst noch in der Station C befindlichen Frontbaugruppe 3 + 6 durch Verschwenken um die Mittelachse 103' um 180° in die Station D des Düsenwerkzeuges 102 geschwenkt und fluchtet damit nunmehr mit der bereits in Station D im Auswerferwerkzeug 101 befindlichen Grundkörper 2.

Durch das anschließende Schließen des Werkzeuges, also Heranfahren des Auswerferwerkzeuges 101 an das Düsenwerkzeug 102, wird der in der Station D befindliche Grundkörper 2 über den Lichtleiter 6 des ebenfalls in Station D auf der anderen Werkzeughälfte befindlichen Frontbaugruppe 3 + 6 geschoben, bis der Grundkörper 2 an der Rückseite der Frontplatte 3 verrastet und die Abdeckung 1 fertig hergestellt ist.

Anschließend wird das Werkzeug 100 wieder geöffnet, wobei die fertig gestellte Abdeckung 1 in der Station D des Auswerferwerkzeuges 1 zunächst verbleibt und von dort mittels eines nicht näher dargestellten Auswerfers ausgeworfen wird.

Auf diese Art und Weise wird vollautomatisch die aus mehren Teilen bestehende Abdeckung 1 nicht nur als Spritzteil hergestellt, sondern auch fertig montiert.

### BEZUGSZEICHENLISTE

- 1: Abdeckung
- 1': Bedienblende
- 2: Grundkörper
- 3: Frontplatte
- 3a: Vorderseite
- 4: Hülse
- 5: Kanal
- 6: Lichtleiterstift
- 7: Armaturentafel
- 8a, b: Formbereich
- 9: Funktionsanzeige
- 10: Tiefenrichtung
- 11a, b: Querrichtung
- 12: Drucktaster
- 13: Platine
- 14: Leuchtdiode
- 15:
- 16: Rastnase

- 100: Spritzwerkzeug
- 100': Axialrichtung, Mittelachse
- 100 a,b: Sektion
- 101: Auswerferwerkzeug, Werkzeughälfte
- 101a: Kontaktfläche
- 102: Düsenwerkzeug, Werkzeughälfte
- 102a: Kontaktfläche
- 103: Werkzeugteil, Indexplatte
- 103': Mittelachse
- 104: Werkzeugschieber
- 105a, b c: Kavität
- 106: Führungsbuchse
- 107: Grundplatte
- 108: Verzahnung
- 109: Zahnstange
- 110: Spritzdüse
- 111: Verbindungskanal

## Patentansprüche

1. Verfahren zum Herstellen einer Abdeckung, insbesondere einer Taste, aus gespritztem Kunststoff, mit
- einer Frontplatte (3) und wenigstens einem einstückig damit verbundenen Lichtleiterstift (6) aus lichtdurchlässigem Kunststoff, der sich von der Frontfläche der Frontplatte (3) aus durch diese hindurch und über deren Rückseite hinaus vorstehend erstreckt,
- einem Grundkörper (2) aus lichtundurchlässigem Kunststoff, welcher sich von der Rückseite der Frontplatte (3) nach hinten abragend um den wenigstens einen Lichtleiterstift (6) herum erstreckt, indem mittels eines Spritzwerkzeuges (100) nacheinander
a) die Frontplatte (3) und der wenigstens eine Lichtleiterstift (6) im gleichen Werkzeug in einem einzigen oder zwei nacheinander stattfindenden Spritzschritten direkt aneinander angespritzt werden,
b) abseits der Frontbaugruppe (3 + 6) aus Frontplatte (3) und Lichtleitstiften (6) im gleichen Werkzeug (100) der Grundkörper (2) gespritzt wird,
**dadurch gekennzeichnet, dass**
c) der Lichtleiterstift (6) in seinem vorderen Endbereich seitlich mit der Frontplatte (3) verschmolzen ist, und nach Öffnen des Werkzeuges (100) entweder der Grundkörper (2) oder die Frontbaugruppe (3 + 6) axial mittels eines beweglichen Werkzeugteiles (103) aus dem Rest des Werkzeuges herausbewegt wird,
d) das Werkzeugteil (103) mit dem axial herausbewegten Bauteil so quer bewegt wird, dass sich dieses in fluchtender Position zu dem wenigstens einen Lichtleiterstift (6) befindet, und
e) das Werkzeug (100) geschlossen wird und dabei der Grundkörper (2) mit seinem wenigstens einen Kanal (5) über den wenigstens einen Lichtleiterstift (6) in Richtung Frontplatte (3) geschoben wird und auf deren Rückseite mit der Frontplatte (3) verrastet wird, und
f) nach Öffnen des Werkzeuges (100) die Abdeckung (1) entnommen wird.

2. Verfahren nach Anspruch 1,
**dadurch gekennzeichnet, dass**
- die eine Werkzeughälfte des Werkzeuges (100), insbesondere das Auswerferwerkzeug (101), um die Axialrichtung (100') drehbar ist und
- Grundkörper (2), Frontplatte (3) und Lichtleiterstifte (6) in verschiedenen Sektionen (100 a, b) des gleichen Werkzeuges (100), insbesondere der nicht drehbaren Werkzeughälfte des Werkzeuges (100), gespritzt werden.

3. Verfahren nach einem der vorhergehenden Ansprüche,
**dadurch gekennzeichnet, dass**
nach dem Spritzen von Lichtleiterstift (6) und Frontplatte (3) in der einen Werkzeughälfte diese in der einen Werkzeughälfte, insbesondere dem Auswerferwerkzeug (101), verbleiben und der Grundkörper (2) nach der Herstellung in der anderen Werkzeughälfte in der anderen Werkzeughälfte, insbesondere dem Düsenwerkzeug (102), verbleiben.

4. Verfahren nach einem der vorhergehenden Ansprüche,
**dadurch gekennzeichnet, dass**
- der Grundkörper (2) nach dem Spritzen in derjenigen Werkzeughälfte verbleibt, in der auch Lichtleiterstifte (6) und Frontplatte (3), also die Frontbaugruppe, verblieben sind,
- der Grundkörper (2) in dieser Werkzeughälfte mit seiner Frontfläche in diese Werkzeughälfte hinein weisenden vorderen Stirnflächen hergestellt wird,
- das Werkzeugteil (103), insbesondere die Indexplatte (103), in der gleichen Werkzeughälfte angeordnet ist.

5. Verfahren nach einem der vorhergehenden Ansprüche,
**dadurch gekennzeichnet, dass**
das Spritzwerkzeug (100) zwischen den beiden Werkzeughälften eine Wendeplatte umfasst, die um eine Achse quer zur Axialrichtung (100') um 180° verschwenkbar ist, und entweder der Grundkörper (2) oder die Frontbaugruppe (3 + 6) nach dem Spritzen in der Wendeplatte verbleiben und durch Verschwenken der Wendeplatte in die zu dem anderen Bauteil (5) fluchtende Position gebracht werden.

6. Verfahren nach einem der vorhergehenden Ansprüche,
**dadurch gekennzeichnet, dass**
das Werkzeugteil (103) eine Indexplatte (103) ist, welches um seine axiale Achse, insbesondere seine Mittelachse (103'), gedreht, insbesondere um 180° gedreht wird.

7. Verfahren nach einem der vorhergehenden Ansprüche,
**dadurch gekennzeichnet, dass**
ein Werkzeugschieber (104) mechanisch, hydraulisch oder pneumatisch axial bezüglich des ihn tragenden Werkzeuges (100) zum Ineinanderschieben der beiden Bauteile verschoben wird.

8. Verfahren nach einem der vorhergehenden Ansprüche,
**dadurch gekennzeichnet, dass**
der Grundkörper (2) an der Rückseite der Frontplatte (3) formschlüssig verrastet und/ oder kraftschlüssig eingepresst wird.

9. Spritzgusswerkzeug (100) zur Verwendung in einem Verfahren nach Anspruch 1 mit zwei Werkzeughälften, insbesondere Auswerferwerkzeug (101) und Düsenwerkzeug (102), die beim Spritzen mit ihrem Kontaktflächen (101a, 102a) gegeneinander gepresst werden, wobei
- beide Werkzeughälften (101, 102) mehrere Sektionen (100 a, b) mit je mindestens einer Spritzkavität darin aufweisen,
- eine Werkzeughälfte, insbesondere das Auswerferwerkzeug (101) gesteuert drehbar um die Axialrichtung (100') von einer zur nächsten Sektion (100 a, b) ist,
**dadurch gekennzeichnet, dass**
im Werkzeug (100), insbesondere der nicht drehbaren Werkzeughälfte, insbesondere dem Düsenwerkzeug (102), insbesondere nur in einer Sektion, ein Werkzeugteil (103) vorhanden ist, das axial aus der Kontaktfläche dieses Werkzeuges (100) heraus verfahrbar und im ausgefahrenen Zustand
- entweder um die axiale Richtung (100') z. B. seine Mittelachse (103), verschwenkbar, insbesondere um 180° verschwenkbar, ist
- oder quer zur axialen Richtung (100') verlagerbar ist,
- oder um eine Querachse zur axialen Richtung (100') verschwenkbar, insbesondere um 180° verschwenkbar ist, wobei das Werkzeug (100) so ausgelegt ist, dass nacheinander:
a) die Frontplatte (3) und der wenigstens eine Lichtleiterstift (6) im gleichen Werkzeug in einem einzigen oder zwei nacheinander stattfindenden Spritzschritten direkt aneinander angespritzt werden können, so dass der Lichtleiterstift (6) in seinem vorderen Endbereich seitlich mit der Frontplatte (3) verschmolzen ist, und
b) abseits der Frontbaugruppe aus Frontplatte und Lichtleitstiften im gleichen Werkzeug (100) der Grundkörper (2) gespritzt werden kann,
c) nach Öffnen des Werkzeuges (100) entweder der Grundkörper (2) oder die Frontbaugruppe axial mittels eines beweglichen Werkzeugteiles (103) aus dem Rest des Werkzeuges (100) herausbewegt wird,
d) das Werkzeugteil (103) mit dem axial herausbewegten Bauteil so quer bewegt wird, dass sich dieses in fluchtender Position zu dem wenigstens einen Lichtleiterstift (6) befindet, und
e) beim schließen des Werkzeugs (100) der Grundkörper (2) mit seinem wenigstens einen Kanal (5) über den wenigstens einen Lichtleiterstift (6) in Richtung Frontplatte (3) geschoben wird und auf deren Rückseite mit der Frontplatte verrastet wird, und
f) nach Öffnen des Werkzeuges (100) die Abdeckung entnommen werden kann.

10. Spritzgusswerkzeug (100) nach Anspruch 9,
**dadurch gekennzeichnet, dass**
in einer Werkzeughälfte, insbesondere der nicht drehbaren Werkzeughälfte, insbesondere dem Düsenwerkzeug (102), in einer Sektion ein Werkzeugschieber (104) vorhanden ist, der verschiebbar in der Axialrichtung (100') ist, und der fluchtend zu dem verlagerten Werkzeugteil (103) im Werkzeug angeordnet ist.

11. Spritzgusswerkzeug (100) nach Anspruch 9,
**dadurch gekennzeichnet, dass**
in wenigstens einer der Werkzeughälften (101, 102) eine Material abtragende Werkzeugeinheit, insbesondere eine Fräseinheit, Dreheinheit oder Bohreinheit, eine Lasereinheit und/oder eine Fügeeinheit angeordnet ist, die insbesondere zwischen einer aktivierten und deaktivierten Lage gegenüber der sie tragenden Werkzeughälfte (101, 102) verlagerbar ist.

12. Abdeckung (1) aus gespritztem Kunststoff, mit
- mit einem Grundkörper (2),
- wenigstens einem Lichtleiterstift (6) aus lichtdurchlässigem Kunststoff
- wenigstens einem auf der der Frontplatte (3) zugewandten Vorderseite (2a) des Grundkörpers (2) offenen Kanal (5) im Grundkörper (2),
- wobei sich der wenigstens eine Lichtleiterstift (6) in dem Kanal (5) des Grundkörpers (2) befindet,
- der Lichtleiterstift (6) bis zur Vorderseite (3a) der Frontplatte (3) reicht,
- der Lichtleiterstift (6) mit den Wänden des Kanals (5) des Grundkörpers (2) weder verschmolzen noch verklebt ist, und
- der Grundkörper (2) mit der Frontplatte (3) verbunden, insbesondere verrastet, ist.
**dadurch gekennzeichnet, dass**
- der Lichtleiterstift (6) in seinem vorderen Endbereich seitlich mit der Frontplatte (3) verschmolzen ist.

13. Abdeckung nach Anspruch 12,
**dadurch gekennzeichnet, dass**
der Grundkörper (2) aus lichtundurchlässigem Material, insbesondere schwarzem oder weißem Material, besteht.

14. Abdeckung nach einem der Ansprüche 12 bis 13,
**dadurch gekennzeichnet, dass**
die Lichtleiterstifte (6) und/oder die Kanäle (5) sich von dem vorderen zum hinteren Ende verjüngen, insbesondere konisch verjüngen.

## Claims

1. A method for producing a cover, in particular a key, made from an injection molded plastic material, the cover comprising:
- a front plate (3) and at least one light conductor pin (6) that is integrally connected with the front plate and made from a light permeable material wherein the light conductor pin extends from a front surface of the front plate (3) through the front plate (3) and beyond a backside of the front plate,
- a base element (2) made from a non-light permeable plastic material wherein the base element extends from a backside of the front plate (3) and protrudes in a backward direction about the at least one light conductor pin (6), the method comprising the following sequential steps that are performed in an injection molding tool (100),
a) integrally injection molding the front plate (3) and the at least one light conductor pin (6) directly connected with each other in the same tool in a single injection molding step or in two sequential injection molding steps,
b) injection molding the base element (2) remote from a front plate assembly (3 + 6) including the front plate (3) and the light conductor pin (6) in the same tool (100), **characterized in that**
c) the light conductor pin (6) is laterally melted together with the front plate (3) in a front end portion of the light conductor pin (6) and after opening the tool (100) either the base element (2) or the front assembly (3+6) are axially moved out from a remainder of the tool by a movable tool element (103),
d) the tool element (103) with the axially movable component is moved transversally so that the tool element (103) is aligned with the at least one light conductor pin (6), and
e) the tool (100) is closed and the base element (2) is moved with its at least one channel (5) over the at least one light conductor pin (6) in a direction towards the front plate (3) and interlocked with the front plate (3) on a backside thereof, and
f) after opening the tool (100) the cover (1) is retrieved.

2. The method according to claim 1,
**characterized in that**
- a first tool half of the tool (100), in particular an ejector tool (101) is rotatable about an axial direction (100'), and
- the base element (2), the front plate (3), and the light conductor plate (6) are injection molded in different sections (100 a, b) of the same tool (100), in particular of the non-rotatable tool half of the tool (100).

3. The method according to one of the preceding claims
**characterized in that**,
- after injection molding the light conductor pin (6) and the front plate (3) in the first tool half they remain in the first tool half, in particular in the ejector tool (101) and the base element (2) after being produced in the other tool half remains in the other tool half, in particular in the nozzle tool (102).

4. The method according to one of the preceding claims,
**characterized in that**
- the base element (2) remains in the tool half after injection molding in which also the light conductor pin (6) and the front in (3), thus the front assembly have remained,
- the base element (2) is produced in this tool half so that a front surface of the base element is oriented with front faces pointing into the tool half,
- the tool element (103), in particular the index plate (103) is arranged in the same tool half.

5. The method according to one of the preceding claims,
**characterized in that**
- the injection molding tool (100) includes a reversal plate between the two tool halves, wherein the reversal plate is pivotable by 180° about an axis that is oriented transversal to the axial direction (100'), and either the base element (2) or the front assembly (3 + 6) remain in the reversal plate after injection molding and are brought into an aligned position with the other component (5) by pivoting the reversal plate.

6. The method according to one of the preceding claims,
**characterized in that**
- the tool element (103) is an index plate (103) which is rotated about its axial axis, in particular its center axis (103'), in particular rotated by 180°.

7. The method according to one of the preceding claims,
**characterized in that**
- a tool slide (104) is displaced mechanically, hydraulically, or pneumatically in an axial direction with respect to the tool element (100) that supports the tool slide so that both components are moved into each other.

8. The method according to one of the preceding claims,
**characterized in that**
- the base element (2) is interlocked in a form locking manner at a backside of the front plate (3) and/or pressed in in a friction locked manner.

9. An injection molding tool (100) configured to perform the method according to claim 1 and comprising two tool halves, in particular an ejector tool (101) and a nozzle tool (102) which are pressed against each other with their contact surfaces (101a, 102a) during injection molding, wherein
- both tool halves, (101, 102) include plural sections (100 a, b) respectively including at least one injection molding cavity,
- a first tool half, in particular the ejector tool (101) is rotatable in a controlled manner about the axial direction (100') from one section (100 a, b) to another section (100 a, b),
**characterized in that**
a tool element (103) is provided in the tool (100), in particular in the non-rotatable tool half, in particular in the nozzle tool (102), in particular only in one section thereof wherein the tool element (103) is axially movable about of the contact surface of the tool (100) and in an extended condition
- the tool element (103) is pivotable either about the axial direction (100'), e.g. its center axis (103), in particular pivotable by 180°, or
- movable transversal to the axial direction (100'),
- or pivotable about a transversal axis relative to the axial direction (100'), in particular pivotable by 180°, wherein the tool (100) is configured so that the following steps can be performed sequentially:
a) integrally injection molding the front plate (3) and the at least one light conductor pin (6) directly connected with each other in the same tool in a single injection molding step or in two sequential injection molding steps,
b) injection molding the base element (2) remote from a front plate assembly (3 + 6) including the front plate (3) and the light conductor pin (6) in the same tool (100), **characterized in that**
c) the light conductor pin (6) is laterally melted together with the front plate (3) in a front end portion of the light conductor pin (6) and after opening the tool (100) either the base element (2) or the front assembly (3) are axially moved out from a remainder of the tool by a movable tool element (103),
d) the tool element (103) with the axially movable component is moved transversally so that the tool element (103) is aligned with the at least one light conductor pin (6), and
e) the tool (100) is closed and the base element (2) is moved with its at least one channel (5) over the at least one light conductor pin (6) in a direction towards the front plate (3) and interlocked with the front plate (3) on a backside thereof, and
f) after opening the tool (100) the cover (1) is retrieved.

10. The injection molding tool (100) according to claim 9
**characterized in that**,
- a tool slide (104) is provided in a tool half, in particular in the non-rotatable tool half, in particular in the nozzle tool (102), in a section thereof, wherein the tool slide (104) is movable in the axial direction (100') and arranged in the tool in alignment with the displaced tool element (103).

11. The injection molding tool (100) according to claim 9,
**characterized in that**
at least one of the tool haves (101, 102) includes a material removing tool unit, in particular a milling unit, turning unit, or boring unit, a laser unit and/or a joining unit which is displaceable in particular between an activated position and a deactivated position relative to a tool half (101, 102) supporting it.

12. A cover (1) made from an injection molded plastic material, the cover comprising:
- a base element (2),
- at least one light conductor pin (6) made from a light permeable plastic material,
- at least one channel (5) configured in the base element (2) wherein the at least one channel is open on a front side (2a) of the base element (2) that is oriented towards the front plate (3),
- wherein the at least one light conductor pin (6) is arranged in the channel (5) of the base element (2),
- wherein the light conductor pin (6) extends to the front side (3a) of the front plate (3),
- wherein the light conductor pin (6) is neither melted together or glued together with the walls of the channel (5) of the base element (2),
- the base element (2) is connected, in particular interlocked with the front plate (3),
**characterized in that**,
- the light conductor pin (6) is laterally melted together with the front plate (3) in a front end portion of the light conductor pin (6).

13. The cover according to claim 12
**characterized in that**,
the base element (2) is made from a light impermeable material, in particular a black or white material.

14. The cover according to one of the claims 12 through 13
**characterized in that**,
the light conductor pin (6) and/or the channels (5) taper from a front end to a rear end, in particular taper conically.

## Revendications

1. Procédé pour produire une couverture, en particulier une touche en matière plastique moulée par injection, avec
- une plaque frontale (3) et au moins une tige de conducteur optique (6) en matière plastique transparente formée intégralement qui s'étend de la face frontale de la plaque frontale (3), passe à travers de celle-ci et dépasse la face arrière de celle-ci en saillie,
- un corps de base (2) en matière plastique opaque qui s'étend de la face arrière de la plaque frontale (3) vers l'arrière en saillie autour de ladite au moins une tige de conducteur optique (6), en ce qu'au moyen d'un outil d'injection (100) dans cet ordre
a) la plaque frontale (3) et ladite au moins une tige de conducteur optique (6) dans le même outil sont directement liées par moulage par injection dans une seule étape ou deux étapes de moulage par injection,
b) loin du module de front (3+6) de plaque frontale (3) et de tiges de conducteur optique (6), le corps de base (2) est moulé par injection dans le même outil (100) **caractérisé en ce que**
c) la tige de conducteur optique (6) est fusionnée latéralement dans sa région terminale avant avec la plaque frontale (3), et
après l'ouverture de l'outil (100) le corps de base (2) ou le module de front (3+6) sont sortis du reste de l'outil axialement au moyen d'une pièce d'outil (103) mobile,
d) la pièce d'outil (103) est bougé transversalement avec le composant déplacée axialement de sorte que celle-ci est dans une position alignée par rapport à ladite au moins une tige de conducteur optique (6), et
e) l'outil (100) est fermé et le corps de base (2) avec son au moins un canal (5) est poussé sur ladite au moins une tige de conducteur optique (6) vers la plaque frontale (3) et est verrouillé sur sa face arrière avec la plaque frontale (3), et
f) après l'ouverture de l'outil (100) la couverture (1) est retirée.

2. Procédé selon la revendication 1,
**caractérise en ce que**
- une moitié d'outil de l'outil (100), en particulier l'outil éjecteur (101) peut être tourné autour du sens axial (100') et
- le corps de base (2), la plaque frontale (3) et les tiges de conducteur optique (6) sont moulé par injection dans des sections différentes (100 a, b) du même outil (100), en particulier dans la moitié d'outil non-rotative de l'outil (100).

3. Procédé selon une des revendications précédentes,
**caractérisé en ce que**
après le moulage par injection de la tige de conducteur optique (6) et de la plaque frontale (3) dans ladite une moitié d'outil, celles-ci restent dans ladite une moitié d'outil, en particulier l'outil éjecteur (101) et **en ce que** le corps de base (2) reste après la production dans l'autre moitié d'outil, en particulier dans l'outil de buse (102).

4. Procédé selon une des revendications précédentes,
**caractérisé en ce que**
- le corps de base (2) reste après le moulage par injection dans la moitié d'outil où les tiges de conducteur optique (6) et la plaque frontale (3) ont aussi été retenues,
- le corps de base (2) dans cette moitié d'outil avec sa face frontale est réalisé avec des faces frontales s'étendant dans cette moitié d'outil,
- la pièce d'outil (103), en particulier la plaque d'indexation (103) est arrangée dans la même moitié d'outil.

5. Procédé selon une des revendications précédentes,
**caractérisé en ce que**
l'outil de moulage par injection (100) comprend entre les deux moitiés d'outil une plaquette qui est pivotable par 180° autour d'un axe transversale au sens axial (100') et **en ce que** le corps de base (2) ou le module de front (3+6) restent dans la plaquette après le moulage par injection et sont amenés dans la position alignée avec l'autre composant (5) en pivotant la plaquette.

6. Procédé selon une des revendications précédentes,
**caractérisé en ce que**
la pièce d'outil (103) est une plaque d'indexation (103) qui est tournée autour de son axe axial, en particulier son axe central (103'), en particulier de 180°.

7. Procédé selon une des revendications précédentes,
**caractérisé en ce que**
un coulisseau d'outil (104) est déplacé par rapport à l'outil (100) qui le porte, de manière mécanique, hydraulique ou pneumatique pour un emboîtement des deux composants.

8. Procédé selon une des revendications précédentes,
**caractérisé en ce que**
le corps de base (2) est verrouillé de manière solidaire à la face arrière de la plaque frontale (3) et/ou est enfoncé par force mécanique.

9. Outil de moulage par injection (100) pour l'utilisation dans un procédé selon la revendication 1 avec deux moitiés d'outil, en particulier un outil éjecteur (101) et un outil de buse (102) qui pendant l'injection sont pressés l'un contre l'autre, où
- les deux moitiés d'outil (101, 102) comprennent plusieurs sections (100 a, b) avec au moins une cavité d'injection respective,
- une moitié d'outil, en particulier l'outil éjecteur (101), peut être tourné de façon contrôlée autour du sens axial (100') d'une section à la section suivante (100 a, b),
**caractérisé en ce que**
une partie d'outil (103) est présente dans l'outil (100), en particulier dans la moitié d'outil non-rotative, en particulier dans l'outil de buse (102), en particulier seulement dans une section, qui peut être sortie axialement hors de la surface de contact de cet outil (100) et qui dans son état sorti
- est pivotable autour du sens axial (100'), par exemple son axe central (103), en particulier par 180°,
- ou peut être déplacée transversalement au sens axial (100'),
- ou est pivotable autour d'un axe transversal au sens axial (100'),
en particulier pivotable par 180°, l'outil (100) étant adapté de telle manière que consécutivement
a) la plaque frontale (3) et ladite au moins une tige de conducteur optique (6) dans le même outil peuvent être directement liées par moulage par injection dans une seule étape ou deux étapes de moulage par injection, de sorte que la tige de conducteur optique (6) est fusionnée latéralement dans sa région terminale avant avec la plaque frontale (3), et
b) loin du module de front de plaque frontale (3) et de tiges de conducteur optique le corps de base (2) peut etre moulé par injection dans le même outil (100)
c) après l'ouverture de l'outil (100) le corps de base (2) ou le module de front (3+6) sont sortis du reste de l'outil (100) axialement au moyen d'une pièce d'outil (103) mobile,
d) la pièce d'outil (103) est bougé transversalement avec le composant déplacée axialement de sorte que celle-ci est dans une position alignée par rapport à ladite au moins une tige de conducteur optique (6), et
e) quand l'outil (100) est fermé le corps de base (2) avec son au moins un canal (5) est poussé sur ladite au moins une tige de conducteur optique (6) vers la plaque frontale (3) et est verrouillé sur sa face arrière avec la plaque frontale, et
f) après l'ouverture de l'outil (100) la couverture (1) est retirée.

10. Outil de moulage par injection (100) selon la revendication 9,
**caractérisé en ce que**
dans une moitié d'outil, en particulier dans la moitié d'outil non-rotative, en particulier dans l'outil de buse (102), dans une section il y a un coulisseau d'outil (104) qui peut être déplacé dans le sens axial (100') et qui est arrangé dans l'outil de manière alignée à la pièce d'outil (103) déplacée.

11. Outil de moulage par injection (100) selon la revendication 9,
**caractérisé en ce que**
une unité d'outil retirant du matériau, en particulier une unité de fraisage, une unité de rotation ou unité de forage, unité laser et/ou une unité d'assemblage est arrangée dans au moins une moitié d'outil (101, 102) qui peut en particulier être déplacée entre une position activée et une position désactivée par rapport à la moitié d'outil (101, 102) qui les porte.

12. Couverture (1) en matière plastique moulée par injection, avec
- un corps de base (2),
- au moins une tige de conducteur optique (6) de matière transparente
- au moins un canal (5) dans le corps de base (2) ouvert à la face avant (2a) du corps de base (2) opposée à la plaque frontale (3),
- ladite au moins une tige de conducteur optique (6) étant située dans le canal (5) du corps de base (2),
- la tige de conducteur optique (6) s'étendant à la face avant (3a) de la plaque frontale (3),
- la tige de conducteur optique (6) n'étant ni fusionnée ni collée aux parois du canal (5) du corps de base (2), et
le corps de base (2) étant lié à la plaque frontale (3), en particulier verrouillé, **caractérisé en ce que**
- la tige de conducteur optique (6) est fusionnée latéralement dans sa région terminale avant avec la plaque frontale (3).

13. Couverture selon la revendication 12,
**caractérisée en ce que**
le corps de base (2) est fait de matériau opaque, en particulier de matériau noir ou blanc.

14. Couverture selon une des revendication 12 à 13,
**caractérisée en ce que**
les tiges de conducteur optique (6) et/ou les canaux (5) se rajeunissent de leur extrémité avant à leur extrémité arrière, en particulier de manière conique.
